Europäisches Patentamt

European Patent Office

Office européen des brevets

(19)

(11) Veröffentlichungsnummer: **0 282 901 B1**

# (12) EUROPÄISCHE PATENTSCHRIFT

(45) Veröffentlichungstag der Patentschrift: 27.12.91

(51) Int. Cl.⁵: **G01N 31/22**

(21) Anmeldenummer: **88103764.2**

(22) Anmeldetag: **10.03.88**

(54) **Kolorimetrisches Gasmessgerät.**

(30) Priorität: **20.03.87 DE 3709296**

(43) Veröffentlichungstag der Anmeldung:
**21.09.88 Patentblatt 88/38**

(45) Bekanntmachung des Hinweises auf die
Patenterteilung:
**27.12.91 Patentblatt 91/52**

(84) Benannte Vertragsstaaten:
**DE FR GB IT NL**

(56) Entgegenhaltungen:
**EP-A- 0 202 423      DE-U- 1 770 389**
**GB-A- 1 070 199      GB-A- 2 084 725**
**GB-A- 2 168 480      US-A- 4 092 119**

**Raghbir Singh Khandpur: Handbook of modern analytical instruments, Tab Books Inc, 1981**

(73) Patentinhaber: **Drägerwerk Aktiengesellschaft**
**Moislinger Allee 53-55**
**W-2400 Lübeck 1(DE)**

(72) Erfinder: **Heckmann, Johannes, Dipl.-Ing.**
**Gothmunderweg 32**
**W-2400 Lübeck(DE)**

EP 0 282 901 B1

## Beschreibung

Die Erfindung betrifft ein kolorimetrisches Gasmeßgerät nach dem Oberbegriff des Anspruchs 1.

Derartige Meßgeräte sind beispielsweise in Form von durchströmbaren Prüfröhrchen oder auch als Dosimeter in Form von Röhrchen oder Plaketten bekannt. Der Gasnachweis geschieht durch Verfärbung einer Indikatorschicht, welche als Füllung in die längsgestreckten Röhrchen eingebracht oder als Belag eines Plakettenträgers ausgebildet ist. Die Ablesung der Gaskonzentration oder -menge erfolgt entweder über eine längs des Röhrchens angebrachte Skalierung oder durch Vergleich der Verfärbungstiefe mit festgelegten Farbstandards.

Solche Gasmeßgeräte sind als Prüfröhrchen in der DE-PS 12 00 021 und als Dosimeterröhrchen aus der DE-OS 14 98 909 bekannt.

Die bekannten kolorimetrischen Gasmeßgeräte besitzen den Nachteil, daß sie aufgrund ihrer gestreckten Form nur eine begrenzte Längenausdehnung haben können und somit nicht für beliebig lange Messungen einsetzbar sind oder ihre Empfindlichkeit durch Verlängerung der Meßstrecke nicht unbegrenzt erhöht werden kann. Bei plakettenförmigen Meßgeräten zur Dosisbestimmung kann eine Skala zur sicheren Ablesung oder für einen Farbtiefenvergleich nur an dafür ungeeigneten Stellen angebracht werden.

In der GB-A-2 084 725 ist ein Dosimeter beschrieben, bei dem von einer Eintrittsstelle aus der nachzuweisende Schadstoff in ein Anzeigeröhrchen diffundiert, in welchem sich ein Indikatorstreifen befindet, der an seinem einen Ende eingespannt ist, im übrigen aber frei von den Röhrchenwänden liegt und von diesen in räumlichem Abstand gehalten ist. Der Indikatorstreifen bietet seine Oberfläche dem in das Röhrchen diffundierenden nachzuweisenden Gas an, was zu einer empfindlichen kolorimetrischen Nachweisreaktion führt, die zu einer Längenverfärbung im Verlauf des Indikatorstreifens führt und für eine Anzeige auswertbar ist.

Der vorliegenden Erfindung liegt somit die Aufgabe zugrunde, ein Gasmeßgerät der genannten Art so zu verbessern, daß seine Meßzeit verlängert und seine Empfindlichkeit erhöht wird, wobei die Bauform platzsparend, klein und handlich bleiben soll, so daß es auch an der Person mitgeführt werden kann.

Die Lösung der Aufgabe erfolgt durch die im kennzeichnenden Teil des Anspruchs 1 aufgeführten Merkmale.

Der Vorteil der Erfindung liegt im wesentlichen darin, daß nunmehr die Indikatorstrecke einerseits um ein Mehrfaches der gestreckten Ausführung verlängert werden kann und dafür andererseits nur ein sehr geringer Platzbedarf auftritt. Damit werden die Vorteile eines langgestreckten Gasmeßgerätes zur Langzeitmessung oder zur Erzielung einer höheren Empfindlichkeit mit dem Vorteil einer kleinformatigen Plakette eines Dosismeßgerätes verbunden. Die Linienführung der Indikatorstrecke kann dabei in beliebig variierbarer Art ineinander verschlungen sein, ohne die Zugänglichkeit des nachzuweisenden Gases zu dem kolorimetrischen Indikator einzuschränken.

So ist beispielsweise eine schneckenförmige Aufwicklung oder eine mäanderförmige Verschlingung der Indikatorstrecke geeignet. Es können aber auch schraubenförmig oder auch zylinderförmig gebildete Aufwicklungen auf einen Stützkörper gewickelt vorgesehen sein. Zur äußeren Ummantelung der Indikatorstrecke können die bei Prüfröhrchen bekannten Glasröhrchen, aber auch flexible Plastschläuche oder auch aus einem Spritzteil zusammen mit dem Stützkörper vorgeformte Indikatorkammern gewählt werden.

Ein auf einer Trägerplatte als Stützkörper aufgetragener Indikatorstreifen enthält auf der Trägerplatte die in einer wässrigen Lösung suspendierte Indikatorsubstanz. Die Indikatorstrecke kann auch als halbschalenförmiger Kanal auf der Trägerplatte aufgesetzt und mit dem entsprechenden Indikator, z.B. imprägniertem Silikagel, gefüllt werden. Danach werden die Kanäle mit einem Deckel abgeschlossen, so daß nunmehr lediglich der Kanaleingang bzw. - ausgang als Zugangsöffnung für das nachzuweisende Gas zur Verfügung steht. Diese Zugangsöffnungen werden in der Bereitschaft dicht umschlossen und erst zur Messung geöffnet.

Um die Konzentration oder die gesammelte Menge an nachzuweisendem Gas feststellen zu können, ist die Abdeckung der Umwegführung mit Sichtmarkierungen versehen. Diese bestehen aus Sichtfenstern in einer sonst undurchsichtigen Abdeckung, welche in einem solchen Abstand zueinander angeordnet sind, daß bei fortschreitender Verfärbung der Indikatorstrecke unter den jeweiligen Sichtfenstern die Verfärbungszone erscheint und somit ein Maß für die Konzentration bzw. Dosismenge abgibt. Dabei kann zweckmäßigerweise jedes der einzelnen Sichtfenster mit einer Meßzahl versehen sein, so daß in aufeinanderfolgenden, schrittweisen Abschnitten die Meßgröße abgelesen werden kann.

Da mit zunehmender Länge der Indikatorstrecke die Strömungs- bzw. Diffusionsgeschwindigkeit unterschiedlich ist, kann dieser Unterschied durch geeignete Formgebung kompensiert werden. So kann sich beispielsweise der Querschnitt einer röhrchenförmigen Indikatorstrecke zu ihrem Ende hin trompetenförmig aufweiten, oder ein flächiger Streifen als Indikatorstrecke zeigt eine sich scherenförmig aufweitende Bahnform. Auch kann zur Variation der Nachweisempfindlichkeit die Indikatorstrecke an verschiedenen Zonen längs der Umwegführung mit unterschiedlichen Mengen an Indikatorsubstanz versehen sein. So ist es beispielsweise möglich, durch Verminderung der Indikatorsubstanz unmittelbar nach der Eintrittsstelle für das zu untersuchende Gas einen Bereich hoher Empfindlichkeit zu schaffen, in dem geringe Konzentrationen oder Mengen nachweisbar sind, und den Endbereich der Indikatorstrecke mit einer erhöhten Menge an Indikatorsubstanz zu versehen, in welchem hohe Konzentrationen oder Mengen nachweisbar sind. Somit ist ein Gasmeßgerät geschaffen, welches zur Untersuchung sowohl geringster als auch hoher Nachweismengen geeignet ist.

Zur gleichzeitigen Messung mehrerer interessierender Gase kann nicht nur ein einziger Indikatorkanal bzw. ein flächig ausgebildeter Indikatorstreifen auf dem Stützkörper aufgebracht sein, sondern mehrere gleichzeitig parallel zueinander, wobei jeder von ihnen mit einem anderen Indikator belegt ist, welcher spezifisch auf ein nachzuweisendes Gas reagiert. Somit ist auf einfache und platzsparende Weise ein Mehrfach-Gasmeßgerät geschaffen worden.

Ein Ausführungsbeispiel der Erfindung wird anhand der schematischen Zeichnung dargestellt und im folgenden näher erläuteret.

Es zeigen:

Fig. 1    die Draufsicht auf ein Gasmeßgerät mit zwei spiralförmig gewundenen Indikatorstrecken bei entferntem Deckel,

Fig. 2    die Draufsicht auf die mit einem Deckel versehenen Indikatorstrecken.

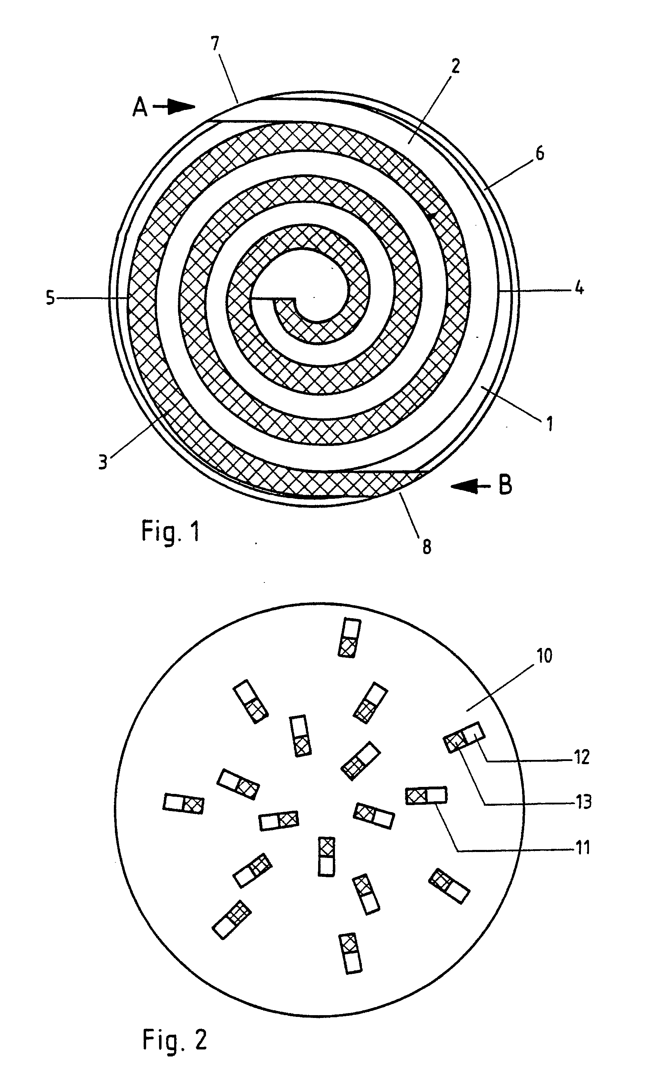

In Figur 1 sind auf einer kreisförmigen Trägerplatte je eine Indikatorstrecke (2) zum Nachweis eines ersten Gases A sowie (3) zum Nachweis eines zweiten Gases B aufgebracht. Beide Indikatorstrecken (2, 3) sind mit unterschiedlichen, für die Gase A, B spezifischen Indikatorsubstanzen versehen, wobei die Indikatorsubstanz für die Strecke (3) durch eine graue Rasterung dargestellt ist. Die Indikatorstrecken (2, 3) werden durch Seitenwände (4, 5) voneinander abgetrennt und besitzen jeweils durch die Gehäusewand (6) geführte Eintrittsöffnungen (7, 8).

In Figur 2 ist das mit einem Deckel (10) geschlossene Gasmeßgerät gezeigt. In dem ansonsten undurchsichtig ausgeführten Deckel (10) sind umlaufend angeordnete Sichtfenster (11) eingelassen. Sie sind derart in Teilfenster (12, 13) aufgeteilt, daß bei einer dem spiralförmigen Verlauf der Indikatorstrecken (2, 3) angepaßten Anordnung der Sichtfenster (11) das Teilfenster (12) über der entsprechend darunter befindlichen Indikatorstrecke (2) und das Teilfenster (13) über der darunterliegenden Indikatorstrecke (3) positioniert ist.

Das im Beispiel dargestellte Gasmeßgerät arbeitet als Diffusionsprobensammler, wobei die verschiedenen Gase A, B über die jeweiligen Eintrittsöffnungen (7, 8) in die Indikatorstrecke (2, 3) hineindiffundieren und entlang dieser Strecken (2, 3) wandern können. Die Seitenwände (4, 5) schließen gegen den Deckel (10) und verhindern einen Übertritt der Gase aus der Indikatorstrecke (2) zu der Indikatorstrecke (3) und umgekehrt. Somit tritt eine der Diffusion entsprechende Verfärbung der jeweiligen Indikatorstrecken (2, 3) auf, welche durch die über den zugehörigen Indikatorstrecken (2, 3) angeordneten Teilfenster (12, 13) bemerkbar wird, sobald die Verfärbungszone diese entsprechenden Teilfenster (12, 13) erreicht hat. Durch einen separaten Kalibriervorgang, welcher nur einmal für die bestimmte Anordnung der Indikatorstrecken (2, 3) zu den zugehörigen Sichtfenstern (11) durchgeführt werden muß, können an den Sichtfenstern (11) geeignete Konzentrationsangaben vorgesehen sein, so daß bei Erscheinen der Verfärbungszone unterhalb eines bestimmten Sichtfensters (11) die dazugehörige Konzentration abgelesen werden kann.

**Patentansprüche**

1.    Kolorimetrisches Gasmeßgerät mit einer für das nachzuweisende Gas über mindestens eine Eintrittsstelle (7, 8) zugänglichen, jedoch ansonsten von der Umgebung abgetrennten Indikatorstrecke (2, 3), welche mit einer mit dem nachzuweisenden Gas eine Verfärbungsreaktion eingehenden Indikatorsubstanz auf einem Träger ausgestattet ist, die bei Anwesenheit des nachzuweisenden Gases von der der jeweiligen Indikatorstrecke (2, 3) zugeordneten Eintrittstelle (7, 8) ausgehend eine längs der Indikatorstrecke (2, 3) fortschreitende Längenverfärbung zeigt, dadurch gekennzeichnet, daß die Indikatorstrecke (2, 3), beginnend an der ihr zugeordneten Einstrittstelle (7, 8) und sich längs ihrer Erstreckung fortsetzend, eine von einem gestreckten Verlauf abweichende Umwegführung aufweist, welche auf einem Stützkörper (1) als Unterlage aufgetragen ist, und daß die Indikatorstrecke durch Seitenwände (4, 5) sowie mit einer gegen die Seitenwände (4, 5) schließenden Abdeckung (10) abgeschlossen ist, welche entlang des Streckenverlaufs in vorgegebenen Abständen Sichtfenster (11) trägt, über die das Fortschreiten der Verfärbungszone am Indikator als Maß für die Menge bzw. Konzentration des nachzuweisenden Gases ablesbar ist.

2.    Kolorimetrisches Gasmeßgerät nach Anspruch 1, dadurch gekennzeichnet, daß die Umwegführung (2, 3) als schneckenförmige Aufwicklung geformt ist.

3. Kolorimetrisches Gasmeßgerät nach Anspruch 1, dadurch gekennzeichnet, daß die Umwegführung (2, 3) als mäanderförmige Verschlingung geformt ist.

4. Kolorimetrisches Gasmeßgerät nach einem der Ansprüche 1 bis 3, dadurch gekennzeichnet, daß die Sichtfenster (11) mit der die zugehörige Menge oder die Konzentration des nachzuweisenden Gases angebenden Meßzahl versehen ist.

5. Kolorimetrisches Gasmeßgerät nach einem der Ansprüche 1 bis 4, dadurch gekennzeichnet, daß die Indikatorstrecke eine längs der Umwegführung (2, 3) dem nachzuweisenden Gas in veränderlicher Menge zugängliche Indikatorsubstanz für die kolorimetrische Reaktion aufweist.

6. Kolorimetrisches Gasmeßgerät nach einem der Ansprüche 1 bis 5, dadurch gekennzeichnet, daß mehrere, jeweils für ein nachzuweisendes Gas spezifisch empfindliche, voneinander unabhängige Umwegführungen vorhanden sind.

## Claims

1. A colorimetric gas measuring apparatus with an indicator course (2,3) accessible for the gas to be detected by way of at least one inlet point (7,8), but otherwise separated from the environment, which course is provided on a carrier with an indicator substance which enters into a discolouration reaction with the gas to be detected, which substance, when the gas to be detected is present, shows a longitudinal discolouration, proceeding from the inlet point (7,8) associated with the respective indicator course (2,3), and advancing along the indicator course (2,3), characterised in that the indicator course (2,3) has, beginning at the inlet point (7,8) associated with it, and continuing along its reach, a circuitous guide deviating from a straightened course, which is laid on a supporting body (1) as base, and in that the indicator course is sealed by side walls (4,5) as well as with a covering (10) closing against the side walls (4,5), which supports along the run of the course at specified intervals inspection windows (11), by way of which the advancing of the discolouration zone on the indicator is able to be read as a gauge for the quantity or concentration of the gas to be detected.

2. A colorimetric gas measuring apparatus according to claim 1, characterised in that the circuitous guide (2,3) is formed as a helical winding.

3. A colorimetric gas measuring apparatus according to claim 1, characterised in that the circuitous guide (2,3) is formed as a meander-shaped twisting.

4. A colorimetric gas measuring apparatus according to one of claims 1 to 3, characterised in that the inspection windows (11) are provided with the measured number indicating the associated quantity or concentration of the gas to be detected.

5. A colorimetric gas measuring apparatus according to one of claims 1 to 4, characterised in that the indicator course has an indicator substance for the colorimetric reaction accessible along the circuitous guide (2,3) for gas to be detected in varying quantity.

6. A colorimetric gas measuring apparatus according to one of claims 1 to 5, characterised in that several, circuitous guides are present, independent of each other, and sensitive in each case specifically for one gas to be detected.

## Revendications

1. Analyseur de gaz colorimétrique comportant un parcours d'indicateur (2, 3) pour le gaz à déceler, accessible par au moins un point d'entrée (7, 8), mais par ailleurs séparé de l'environnement, qui est pourvu, sur un support, d'une substance d'indication provoquant une réaction de coloration avec le gaz à déceler, laquelle substance montre, en présence du gaz à déceler, une coloration longitudinale s'étendant le long du parcours d'indicateur (2, 3), à partir du point d'entrée (7, 8) associé au parcours d'indicateur (2, 3) respectif, caractérisé en ce que le parcours d'indicateur (2, 3) présente, à partir du point d'entrée (7, 8) qui lui est associé et se prolongeant le long de son extension, un parcours de déviation, différent d'une trajectoire rectiligne, qui est appliqué sur un corps d'appui (1) servant de substrat et en ce que le parcours d'indicateur est délimité par des parois latérales (4, 5) ainsi que par un couvercle (10) se fermant contre les parois latérales (4, 5), lequel couvercle porte, le long de la trajectoire, à des distances données, des regards (11) par lesquels il est possible de lire la progression de la zone de coloration sur l'indicateur, laquelle traduit la quantité ou la concentration du gaz à déceler.

2. Analyseur de gaz colorimétrique selon la revendication 1, caractérisé en ce que le parcours de déviation (2, 3) est enroulé en spirale.

3. Analyseur de gaz colorimétrique selon la revendication 1, caractérisé en ce que le parcours de déviation (2, 3) forme des méandres.

4. Analyseur de gaz colorimétrique selon l'une des revendications 1 à 3, caractérisé en ce que les regards (11) sont pourvus des chiffres indiquant la quantité correspondante ou la concentration du gaz à déceler.

5. Analyseur de gaz colorimétrique selon l'une des revendications 1 à 4, caractérisé en ce que le parcours d'indicateur présente une substance d'indication pour la réaction colorimétrique, accessible en quantité variable au gaz à déceler, le long du parcours de déviation (2, 3).

6. Analyseur de gaz colorimétrique selon l'une des revendications 1 à 5, caractérisé en ce qu'il est prévu plusieurs parcours de déviation, indépendants les uns des autres, réagissant chacun de manière spécifique à un gaz à déceler.

Fig. 1

Fig. 2